# EUROPÄISCHE PATENTSCHRIFT

(11) **EP 1 106 410 B1**
(45) Veröffentlichungstag und Bekanntmachung des Hinweises auf die Patenterteilung: **04.06.2003**
(21) Anmeldenummer: 00123960.7
(22) Anmeldetag: 03.11.2000
(51) Int. Cl.: B60J 10/00, B23P 19/04, B62D 65/00

(54) **Arbeitsverfahren zur Klebeanordnung eines Dichtstreifens an einem Flansch einer Schiebedachöffnung in einer Fzg-Karosserie**
Method of adhesively fitting a sealing strip to a flange of a sliding roof opening of a vehicle body
Procédé de fixation par collage d'une bande d'étanchéité sur un rebord d'une ouverture de toit de carrosserie

(30) Priorität: 10.12.1999 DE 19959663
(43) Veröffentlichungstag der Anmeldung: 13.06.2001
(73) Patentinhaber: Bayerische Motoren Werke Aktiengesellschaft, 80809 München (DE)
(72) Erfinder: Rehmböck, Josef, 94431 Pilsting (DE); Pöschl, Helmuth, 94436 Simbach (DE)

(56) Entgegenhaltungen:
- DE-A- 4 243 989
- DE-C- 19 650 652
- DE-C- 19 704 327
- US-A- 5 345 662

## Beschreibung

Die Erfindung bezieht sich nach dem Oberbegriff des Patentanspruches 1 auf ein Arbeitsverfahren zur Klebeanordnung eines Dichtstreifens an einem Flansch einer Schiebedachöffnung in einer Fzg-Karosserie, bei dem der mit einem Liner versehene Dichtstreifen mittels einer über einen entlang eines auf die Karosserie abgesenkt angeordneten Rahmens angetrieben verschiebbaren Fahrwagen um die Schiebedachöffnung herumgeführten Applikationseinrichtung angeklebt wird, wobei in der Applikationsvorrichtung zur höhengleichen Klebeanordnung des Dichtstreifens am Flansch die Applikationseinrichtung über eine von einer Dachrolle gesteuerte Vertikalführung relativ zum Fahrwagen der Karosseriekontur nachgeführt wird.

Die Erfindung betrifft auch eine Vorrichtung zur Durchführung des Verfahrens gemäß Patentanspruch 1 nach dem Oberbegrift des Patentanspruchs 2.

Ein derartiges Arbeitsverfahren und eine derartige Vorrichtung sind Gegenstand des deutschen Patentes DE 197 04 327 C1. Zur Durchführung dieses Arbeitsverfahrens zur Applikation eines mit einer abgedeckten Klebeschicht versehenen Dichtstreifens an einem Flansch einer Schiebedachöffnung dient eine vollautomatisch arbeitende Applikationsvorrichtung Eine derartige Vorrichtung ist für Kleinserien relativ aufwendig.

Für die Applikation eines selbstklebenden Dichtstreifens an einem Begrenzungsflansch einer Schiebedachöffnung ist für Kleinserien aus der deutschen Patentschrift DE 42 43 989 C2 eine handgeführte Applikationsvorrichtung bekannt, die durch ihr Gewicht während der Dichtstreifen-Applikation vom Werker mit erheblicher Anstrengung handzuhaben ist.

Der Erfindung liegt die Aufgabe zugrunde, das gattungsgemäße Arbeitsverfahren so abzuwandeln, dass durch eine Kombination von einfachen manuellen Handhabungen durch den Werker und automatischen Abläufen der Dichtstreifen-Applikation eine in Herstellung und Handhabung kostengünstige Applikationsvorrichtung erzielt ist.

Diese Aufgabe ist mit dem Patentanspruch 1 dadurch gelöst, dass die über eine Hubeinrichtung an einer frei bewegbaren Laufkatze über einem Karosserie-Förderband angeordnete Applikationsvorrichtung von Hand in Nähe der Schiebedachöffnung gebracht und soweit abgesenkt wird, dass durch einen am Rahmen angeordneten, am oberen Rand eines Frontscheibenausschnittes der Karosserie anschlagenden Taster ausgelöst die Applikationsvorrichtung relativ zur Schiebedachöffnung ausgerichtet mit dem Rahmen unter Zwischenschaltung gummielastischer Stützen auf die Karosserie abgesenkt wird, wobei einem vor oder während der automatischen Endabsenkung der Applikationsvorrichtung von Hand am Flansch angeklebten Anfangsabschnitt des Dichtstreifens eine Applikationsrolle der mit der Vertikalführung schwenkbeweglich verbundenen Applikationseinrichtung manuell zugeführt wird und nach Einlegen des mit geringem Übermaß auf Länge zugeschnittenen Dichtstreifens in eine der Applikationsrolle vorgeschalteten Zulaufeinrichtung sowie eine Liner-Abstreifeinrichtung der Umlauf der Applikationseinrichtung per Schalterbetätigung ausgelöst wird und dass schließlich nach Umlauf-Ende und manuellem Lösen der Applikationseinrichtung vom Flansch die Applikationsvorrichtung von der Karosserie automatisch entfernt wird, währenddessen der Dichtstreifen manuell abgelängt und die Stoßstelle mit Druckeinwirkung manuell gefügt wird.

Mit der erfindungsgemäßen Mischung von automatischen Abläufen und vom Werker durchzuführenden Handhabungen ist in vorteilhafter Weise eine im Aufbau einfache und kostengünstige Applikationsvorrichtung erzielt.

Eine zur Durchführung des erfindungsgemäßen Arbeitsverfahrens Vorrichtung ist im Patentanspruch 2 beschrieben.

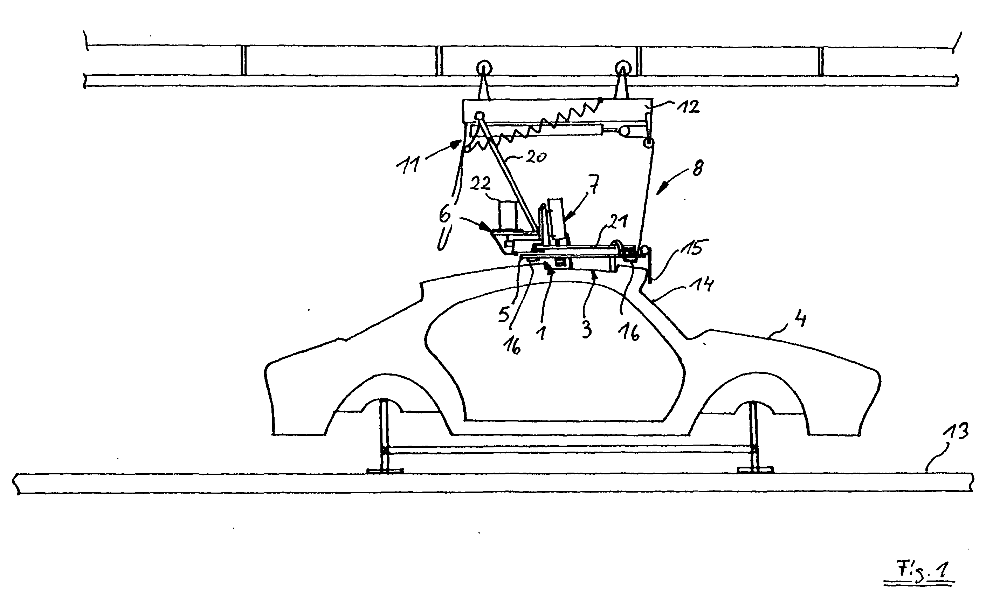

Die Erfindung ist anhand eines in den Zeichnungen dargestellten Ausführungsbeispiels einer Applikationsvorrichtung zur Durchführung des erfindungsgemäßen Arbeitsverfahrens zur Anordnung eines Dichtstreifens beschrieben. Es zeigt
- Figur 1: ein Karosserie-Förderband mit einer zugeordneten Applikationsvorrichtung,

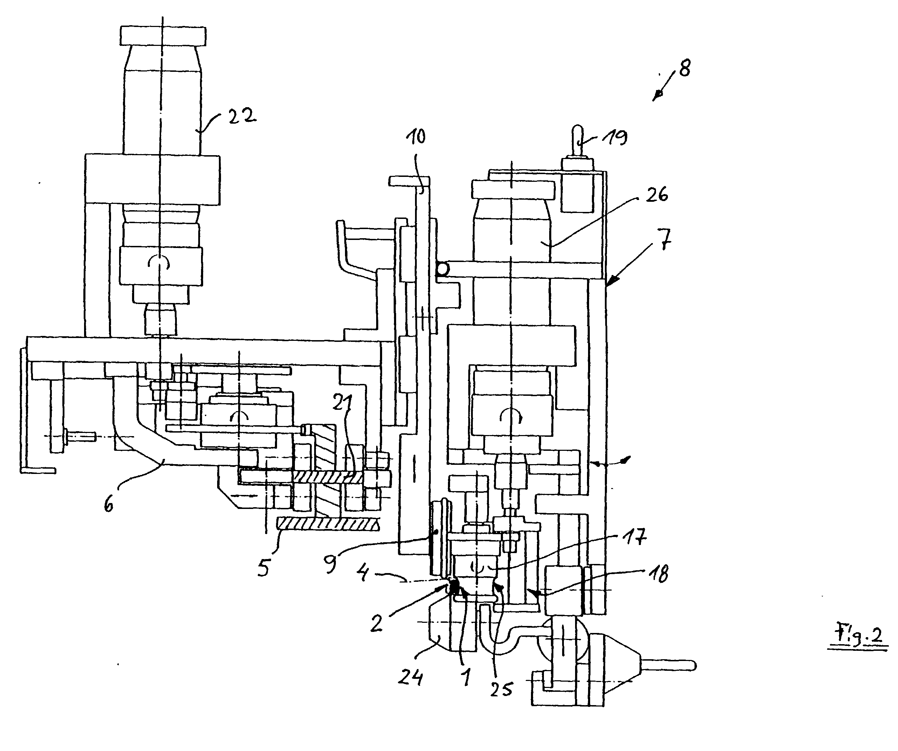

- Figur 2: einen auf einem Rahmen der Applikationsvorrichtung angeordneten Fahrwagen zum automatischen Umlauf einer Applikationseinrichtung um die Schiebedachöffnung,

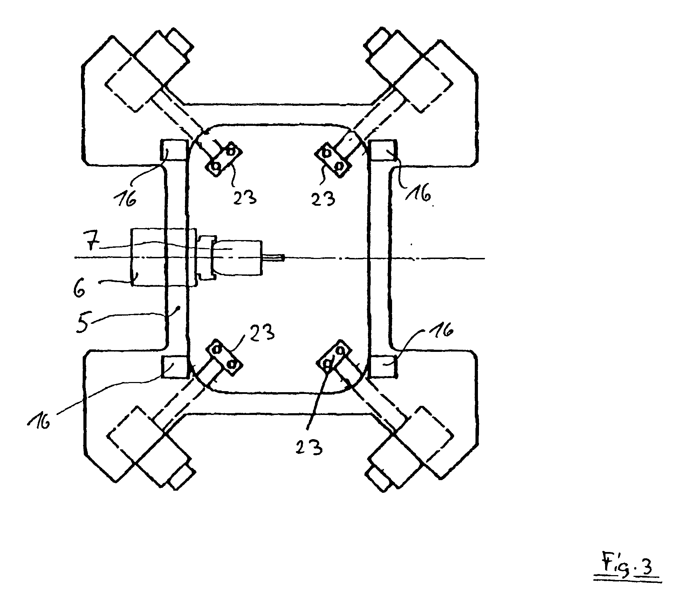

- Figur 3: den Applikations-Rahmen in Ansicht von unten mit motorisch gesteuerten Anschlagelementen zur Positionierung relativ zur Schiebedachöffnung.

Zur Durchführung des erfindungsgemäßen Arbeitsverfahrens zur Applikation eines Dichtstreifens 1 an einem Flansch 2 einer Schiebedachöffnung 3 in einer Fahrzeug-Karosserie 4 wird der mit einem Liner bzw. einer Schutzabdeckung versehene Dichtstreifen 1 mittels einer über einen entlang eines auf die Karosserie 4 abgesenkt angeordneten Rahmens 5 angetrieben verschiebbaren Fahrwagen 6 um die Schiebedachöffnung 3 herumgeführten Applikationseinrichtung 7 angeklebt, wobei in der Applikationsvorrichtung 8 zur höhengleichen Klebeanordnung des Dichtstreifens 1 am Flansch 2 die Applikationseinrichtung 7 über eine von einer Dachrolle 9 gesteuerte Vertikalführung 10 relativ zum Fahrwagen 6 der Dachkontur der Karosserie nachgeführt wird.

Zur Erzielung einer in Herstellung und Handhabung kostengünstigen Applikationsvorrichtung 8 wird das bisherige Arbeitsverfahren dahingehend abgewandelt, dass automatische Abläufe der Dichtstreifen-Applikation mit einfachen manuellen Handhabungen durch den Werker kombiniert sind. Dies ist erfindungsgemäß dadurch erreicht, dass die über eine Hubeinrichtung 11 an einer frei bewegbaren Laufkatze 12 über einem Karosserie-Förderband 13 angeordnete Applikationsvorrichtung 8 von Hand in Nähe der Schiebedachöffnung 3 gebracht und soweit manuell gesteuert abgesenkt wird, dass durch einen am Rahmen 5 angeordneten, am oberen Rand eines Frontscheibenausschnittes 14 der Karosserie 4 anschlagenden Taster 15 ausgelöst die Applikationsvorrichtung 8 relativ zur Schiebedachöffnung 3 ausgerichtet mit dem Rahmen 5 unter Zwischenschaltung gummielastischer Stützen 16 auf die Karosserie 4 abgesenkt wird. Vor oder während der manuell ausgelösten automatischen Endabsenkung der Applikationsvorrichtung 8 wird von Hand am Flansch 2 ein Anfangsabschnitt des Dichtstreifens 1 angeklebt und dem Dichtstreifen 1 eine Applikationsrolle 17 der mit der Vertikalführung 10 schwenkbeweglich verbundenen Applikationseinrichtung 7 manuell zugeführt zum Anpressen des Dichtstreifens 1 an den Flansch 2. Nach Einlegen des mit geringem Übermaß auf Länge zugeschnittenen Dichtstreifens 1 in eine der noch stillstehenden Applikationsrolle 17 vorgeschalteten, nicht gezeigten Zulaufeinrichtung sowie einer den Liner bzw. die Schutzabdeckung abstreifenden Abstreifeinrichtung 18 wird der Umlauf der Applikationseinrichtung 7 entlang des Flansches 2 der Schiebedachöffnung 3 durch Betätigung des Schalters 19 ausgelöst. Nach Umlauf-Ende und manuellem Lösen der Applikationseinrichtung vom Flansch 2 wird die Applikationsvorrichtung 8 von der Karosserie 4 gesteuert automatisch abgehoben, währenddessen der Dichtstreifen 1 manuell abgelängt und die Stoßstelle mit Druckeinwirkung manuell gefügt wird.

Bei der erfindungsgemäßen Applikationsvorrichtung 8 zur Durchführung des kombiniert manuell/maschinengeführten Arbeitsverfahrens steht der zur Schiebedachöffnung 3 ausrichtbare Rahmen 5 mit einem pneumatisch und/oder hydraulisch gesteuerte Gestänge 20 der Hubeinrichtung in gelenkiger Verbindung. Weiter trägt der Rahmen 5 eine um die Schiebedachöffnung 3 herumgeführte Führungsbahn 21 für den mit einem Antriebsmotor 22 ausgerüsteten Fahrwagen 6 zum Antrieb der Applikationseinrichtung 7. Weiter ist der Rahmen 5 mit den Eckbereichen der Schiebedachöffnung 3 während der automatischen Endabsenkung der Applikationsvorrichtung 8 zusammenwirkenden Anschlagelementen 23 zur Positionierung des Rahmens 5 relativ zur Schiebedachöffnung 3 ausgerüstet, wobei die Anschlagelemente 23 nach der Positionierung aus dem Bewegungsbereich des Fahrwagens 6 automatisch motorisch betätigt entfernt sind.

Gemäß einer weiteren Ausgestaltung zur manuellen Handhabung der Applikationsvorrichtung 8 ist an der mit dem Fahrwagen 6 über einen Gewichtsausgleich angeordneten Vertikalführung 10 die Applikationseinrichtung 7 zur Heranführung der Applikationsrolle 17 an den Dichtstreifen 1 auf dem Flansch 2 manuell schwenkbeweglich angeordnet und zur Erzielung eines vorbestimmten Anpressdruckes der Applikationsrolle 17 auf den Dichtstreifen 1 auch ver- und entriegelbar ausgebildet. Weiter ist mit der schwenkbeweglichen Zuführung der Applikationsrolle 17 zum Dichtstreifen 1 der an der Vertikalführung 10 gelagerten Dachrolle 9 mit der Andrückposition der Applikationsrolle 17 am Dichtstreifen 1 eine den Flansch 2 der Schiebedachöffnung 3 untergreifende und der Nachführung der Dachwölbung dienende Gegenrolle 24 zugeordnet.

Zur Ausgestaltung der Applikationsvorrichtung 8 ist ferner vorgesehen, dass die mit einer dem Dichtstreifen 1 entsprechend profilierten Umfangsrinne 25 versehene Applikationsrolle 17 mit einer gesonderten Antriebseinrichtung 26 in Verbindung steht derart, dass die Drehrichtung der Applikationsrolle 17 entgegengesetzt ist zu der mit der Fahrtrichtung des Fahrwagens 6 verbundenen Abroll-Drehrichtung. Damit wird während der automatischen Applikation des Dichtstreifens 1 am Flansch 2 der Schiebedachöffnung 3 während der Herumführung um die Schiebedachöffnung 3 der Dichtstreifen 1 gestaucht auf den Flansch 2 aufgepresst und damit eine intensive Verklebung erzielt.

## Patentansprüche

1. Arbeitsverfahren zur Klebeanordnung eines Dichtstreifens an einem Flansch einer Schiebedachöffnung in einer Fahrzeug-Karosserie,
- bei dem der mit einem Liner versehene Dichtstreifen (1) mittels einer über einen entlang eines auf die Karosserie (4) abgesenkt angeordneten Rahmens (5) angetrieben verschiebbaren Fahrwagen (6) um die Schiebedachöffnung (3) herumgeführten Applikationseinrichtung (7) angeklebt wird, wobei
- in der Applikationsvorrichtung (8) zur höhengleichen Klebeanordnung des Dichtstreifens (1) am Flansch (2) die Applikationseinrichtung (7) über eine von einer Dachrolle (9) gesteuerte Vertikalführung (10) relativ zum Fahrwagen(6) der Karosseriekontur nachgeführt wird,
**dadurch gekennzeichnet,**
- **dass** die über eine Hubeinrichtung (11) an einer frei bewegbaren Laufkatze (12) über einem Karosserie-Förderband (13) angeordnete Applikationsvorrichtung (8) von Hand in Nähe der Schiebedachöffnung (3) gebracht und soweit handgesteuert abgesenkt wird, dass
- durch einen am Rahmen (5) angeordneten, am oberen Rand eines Frontscheibenausschnittes (14) der Karosserie (4) anschlagenden Taster (15) ausgelöst die Applikationsvorrichtung (8) relativ zur Schiebedachöffnung (3) ausgerichtet mit dem Rahmen (5) unter Zwischenschaltung gummielastischer Stützen (16) auf die Karosserie (4) abgesenkt wird, wobei
- einem vor oder während der automatischen Endabsenkung der Applikationsvorrichtung (8) von Hand am Flansch (2) angeklebten Anfangsabschnitt des Dichtstreifens (1) eine Applikationsrolle (17) der mit der Vertikalführung (10) schwenkbeweglich verbundenen Applikationseinrichtung (7) manuell zugeführt wird, und
- nach Einlegen des mit geringem Übermaß auf Länge zugeschnittenen Dichtstreifens (1) in eine der Applikationsrolle (17) vorgeschaltete Zulaufeinrichtung sowie eine Liner-Abstreifeinrichtung (18) der Umlauf der Applikationseinrichtung (7) per Schalterbetätigung ausgelöst wird und
- **dass** schließlich nach Umlauf-Ende und manuellem Lösen der Applikationseinrichtung (7) vom Flansch (2) die Applikationsvorrichtung (8) von der Karosserie (4) gesteuert automatisch entfernt wird, währenddessen der Dichtstreifen (1) manuell abgelängt und die Stoßstelle mit Druckeinwirkung manuell gefügt wird.

2. Vorrichtung zur Applikation des Dichtstreifens (1) gemäss dem Arbeitsverfahren nach Anspruch 1, wobei
- der zur Schiebedachöffnung (3) ausrichtbare und mit der Hubeinrichtung (11) in absenkbarer Verbindung stehende Rahmen (5) mit einer um die Schiebedachöffnung (3) herumgeführten Führungsbahn (21) für den mit einem Antriebsmotor (22) ausgerüsteten Fahrwagen (6) ausgebildet ist, und
- dass der Rahmen (5) ferner über mit den Eckbereichen der Schiebedachöffnung (3) während der automatischen Endabsenkung der Applikationsvorrichtung (8) zusammenwirkende Anschlagelemente (23) positioniert ist, wobei
- nach der Rahmen-Positionierung die Anschlagelemente (23) aus dem Bewegungsbereich des Fahrwagens (6) motorisch betätigt entfernt sind,
**dadurch gekennzeichnet,**
- **dass** der Rahmen (5) mit einem pneumatisch und/oder hydraulisch gesteuerten Gestänge (20) mit der Hubeinrichtung (11) in absenkbarer Verbindung steht, und
- **dass** die mit einer dem Dichtstreifen (1) entsprechend profilierten Umfangsrinne (25) versehene Applikationsrolle (17) mit einer gesonderten Antriebseinrichtung (26) in Verbindung steht derart, dass
- die Drehrichtung der Applikationsrolle (17) entgegengesetzt ist zu der mit der Fahrtrichtung des Fahrwagens (6) gegebenen Abroll-Drehrichtung.

3. Vorrichtung nach Anspruch 2, **dadurch gekennzeichnet,**
- **dass** an der mit dem Fahrwagen (6) über einen Gewichtsausgleich angeordneten Vertikalführung (10) die Applikationseinrichtung (7) manuell schwenkbeweglich und ver-/entriegelbar angeordnet ist, wobei
- der an der Vertikalführung (10) gelagerten Dachrolle (9) mit der Andrückposition der Applikationsrolle (17) am Dichtstreifen (1) eine den Flansch (2) der Schiebedachöffnung (3) untergreifende, der Nachführung der Dachwölbung dienende Gegenrolle (24) zugeordnet ist.

## Claims

1. A method of sticking a sealing strip to a flange on a sliding roof opening in a vehicle body,
- wherein the sealing strip (1) together with a liner, by means of a carriage (6) driven along a frame (5) lowered on to the body (4), is stuck to an applicator (7) wound round the sliding roof opening (3), wherein
- in an applicator (8) for sticking the sealing strip (1) to the flange (2) at a uniform height, the applicator (7) is made to follow the shape of the vehicle body via a vertical guide (10) controlled by a roof roller (9) relative to the carriage (6),
**characterised in that**
- the applicator (8), disposed on a lifting device (11) on a freely movable trolley (12) over a body conveyor belt (13) is brought by hand to near the sliding roof opening (3) and lowered under manual control until
- the applicator (8), triggered by a sensor (15) disposed on the frame (5) and abutting the top edge of a front window portion (14) of the body (4), is aligned with the frame (5) relative to the sliding roof opening (3) and is lowered on to the body (4) with interposition of elastomeric supports (16),
- wherein an applicator roller (17) on the applicator (7) pivotably connected to the vertical guide (10) is moved manually towards an initial portion of the sealing strip (1), stuck by hand to the flange (2) before or after automatic final lowering of the applicator (8), and
- after the sealing strip (1), which has been given a slightly excess length, has been inserted into a feed device and a liner stripping device (18) upstream of the applicator roller (17), the circulating movement of the applicator (7) is initiated by a switch and
- finally after the circulatory movement and after the applicator (7) has been manually released from the flange (2), the applicator (8) is automatically removed in controlled manner from the body (4), during which time the sealing strip (1) is manually cut to length and the joint is manually secured under pressure.

2. A device for applying the sealing strip (1) according to the method in claim 1, wherein
- the frame (5), which can be aligned with the sliding roof opening (3) and is connected to and can be lowered by the lifting device (11), is formed with a guide track (21) extending round the sliding roof opening (3) for the carriage (6), which is equipped with a drive motor (22), and
- the frame (5) is also positioned by abutment elements (23) co-operating with the corner regions of the sliding roof opening (3) during the automatic final lowering of the applicator (8), wherein
- after the frame has been positioned, the abutment elements (23) are mechanically removed from the area in which the carriage (6) moves,
**characterised in that**
- the frame (5) is connected to and can be lowered by the lifting device (11) by means of a pneumatically and/or hydraulically actuated linkage (20) and
- the applicator roller (17), which is formed with a peripheral channel (25) profiled in accordance with the sealing strip (1), is so connected to a separate drive device (26) that
- the direction of rotation of the applicator roller (17) is opposite to the direction of rotation when unrolling, as determined by the direction of travel of the carriage (6).

3. A device according to claim 2, **characterised in that**
- the applicator (7) on the vertical guide (10) disposed with the carriage (6) via a weight compensating means is manually pivotable and lockable and unlockable, wherein
- a co-operating roller (24) adapted to follow the movement of the roof curvature and extending under the flange (2) of the sliding roof opening (3) is associated with the roof roller (9) mounted on the vertical guide (10) and with the position of the applicator roller (17) pressed on the sealing strip (1).

## Revendications

1. Procédé d'application par collage d'une bande d'étanchéité sur un rebord d'une ouverture de toit de carrosserie,
- selon lequel on colle la bande d'étanchéité (1) munie d'un film de recouvrement, à l'aide d'une installation d'application (7) guidée autour de l'ouverture du toit (3) à l'aide d'un chariot (6) entraîné en coulissement le long d'un cadre (5) descendu sur la carrosserie (4),
- dans le dispositif applicateur (8), pour fixer par collage à hauteur égale la bande d'étanchéité (1) sur le rebord (2), l'installation d'application (7) est asservie au contour de la carrosserie, par un guidage vertical commandé par un galet de toit (9), par rapport au chariot (6),
**caractérisé en ce que**
- le dispositif applicateur (8) relié, par l'intermédiaire d'un dispositif de levage (11), à un chariot (12) monté libre en mouvement au-dessus d'une bande transporteuse de carrosserie (13), est conduit à la main à proximité de l'ouverture (3) du toit coulissant et le dispositif applicateur est abaissé par commande manuelle de façon qu'
- un palpeur (15), prévu sur le cadre (5), rencontrant le bord supérieur de la découpe du pare-brise (14) de la carrosserie (4), déclenche le dispositif applicateur (8) qui, aligné par rapport à l'ouverture de toit (3), est abaissé avec le cadre (5) en interposant des appuis élastiques (16) sur la carrosserie (4), selon lequel
- avant ou pendant la fin automatique du mouvement de descente du dispositif applicateur (8), un segment de début de la bande adhésive (1) collée à la main au rebord (2), on amène manuellement un galet applicateur (17) de l'installation d'application (7) reliée de manière mobile en pivotement au guidage vertical (10), et
- après mise en place de la bande d'étanchéité (1) coupée avec une faible surlongueur dans une installation d'alimentation, en amont du galet applicateur (17) ainsi que dans une installation d'enlèvement du revêtement (18), on déclenche le mouvement de circulation de l'installations d'application (7) en actionnant un interrupteur, et
- finalement après la fin du mouvement de circulation et le détachement manuel de l'installation d'application (7) par rapport au rebord (2), on enlève par commande automatique le dispositif applicateur (8) de la carrosserie (4) et pendant ce temps on coupe à la longueur, manuellement, la bande d'étanchéité (1) et on assemble bout à bout manuellement les extrémités en exerçant une pression.

2. Dispositif pour appliquer une bande d'étanchéité (1) selon le procédé de la revendication 1, dans lequel
- le cadre (5), qui peut être aligné par rapport à l'ouverture du toit (3) et peut être abaissé en liaison avec l'installation de levage (11), est formé d'un rail de guidage (21) entourant l'ouverture de toit (3) pour le chariot (6) équipé d'un moteur d'entraînement (22),
- le cadre (5) est positionné par des éléments de butée (23) qui coopèrent avec les zones de coins de l'ouverture de toit (3) pendant la fin de l'abaissement automatique du dispositif applicateur (8), et
- après le position du cadre, les éléments de butée (23) sont écartées de la zone de mouvement du chariot (6) par un moteur d'actionnement,
**caractérisé en ce que**
- le cadre (5) est en liaison par une tringlerie (20) à commande pneumatique et/ou hydraulique pour être abaissé avec l'installation de levage (11) et
- le galet applicateur (17) ayant une gorge périphérique (25) profilée en fonction de la bande d'étanchéité (1), est en liaison avec une installation d'entraînement (26) particulière de façon que
- le sens de rotation du galet applicateur (17) soit opposé au sens de rotation correspondant à la direction de déplacement du chariot (6).

3. Dispositif selon la revendication 2,
**caractérisé en ce que**
- le guide vertical (10), installé sur le chariot (6) avec un compensateur de poids, porte l'installation d'application (7) de façon à pouvoir pivoter manuellement et/ou être verrouillé/déverrouillé, et
- au galet de toit (9) monté sur le guide vertical (10) dans la position comprimée du galet applicateur (17) contre la bande d'étanchéité (1), on associe un contre-galet (24) servant suivre la courbure du toit et qui vient prendre sous le bord (2) de l'ouverture de toit (3).
